# EUROPEAN PATENT APPLICATION

(11) **EP 4 670 924 A1**
(43) Date of publication of application: **31.12.2025**
(21) Application number: 25171340.0
(22) Date of filing: 17.04.2025
(51) Int. Cl.: B25J 9/16, B25J 9/00, G05B 19/423

(54) **ROBOT SYSTEM**

(30) Priority: 26.06.2024 JP 2024103058
(71) Applicant: DAIHEN Corporation, Yodogawa-ku Osaka-shi Osaka 532-8512 (JP)
(72) Inventor: AOKI, Takumi, Osaka, 5328512 (JP)
(74) Representative: Manitz Finsterwald Patent- und Rechtsanwaltspartnerschaft mbB

(57) **Abstract**

A robot system includes: a welding torch portion attached to a distal end of a robot arm; a switch portion that causes, when switched to an on state, the robot to be operable according to an external force; a button to which a specific function is assigned; a mode setting unit that sets an operation mode for operating the robot; and an operation disabling unit that disables an operation on the button while the operation mode is set to a direct operation mode in which an operator directly applies the external force to the robot by hand and operates the robot by moving the robot according to the external force, and the switch portion is maintained in the on state, in which the switch portion and the button are provided on any one of the robot arm or a member attached to the robot arm and attached at a position different from the tool portion.

## Description

### Background

### Field

The present invention relates to a robot system.

### Description of Related Art

Patent Publication JP-A-2015-199174 below discloses a technology called direct teaching in which teaching is performed by a lead-through operation (direct operation) in which an operator manually applies an external force to a manipulator, and the manipulator is operated by detecting the external force in a cooperative robot on the premise of cooperative work with a person. The direct teaching makes it possible to teach an operation more easily than using a teaching pendant. In Patent Publication JP-A-2015-199174, a handle attached to a wrist of a robot via an adapter is operated to perform the direct teaching. In addition, a switch is provided on such a handle to directly perform turning on/off of an operation, record a position for teaching, and perform a preset operation.

### Summary

In the case of an arc welding robot, when the robot is moved, it is necessary to precisely adjust a welding position and angle of a workpiece in units of several millimeters for a tip position of a torch attached to a distal end and in units of several degrees for a torch angle. In the case of performing the direct teaching with such a robot for an application requiring a precise operation, an operator grips a manipulator, a handle attached to the manipulator, or the like while gazing at a tool tip of the robot, and directly operates the robot. That is, the operator moves the robot without looking at a gripped portion during the direct operation. At this time, in a case where a button for turning on/off the above-described direct operation or position recording is provided in a grip portion, there is a possibility that the operator erroneously presses the button. In this case, there is a possibility that an operation different from an operation intended by the operator is activated, which causes deterioration of efficiency in work.

Therefore, an object of the present invention is to provide a robot system capable of improving efficiency in work of an operator.

A robot system according to an aspect of the present invention includes: a tool portion attached to a distal end of a robot arm of a cooperative robot; a switch portion that causes, when switched to an on state, the cooperative robot to be operable according to an external force; a button to which a specific function is assigned; a mode setting unit that sets an operation mode for operating the cooperative robot; and an operation disabling unit that disables an operation on the button while the operation mode is set to a direct operation mode in which an operator directly applies the external force to the cooperative robot by hand and operates the cooperative robot by moving the cooperative robot according to the external force, and the switch portion is maintained in the on state, in which the switch portion and the button are provided on any one of the robot arm or a member attached to the robot arm and attached at a position different from the tool portion.

According to this aspect, it is possible to disable the operation on the button provided at the same position as the switch portion and to which the specific function is assigned while the operation mode for operating the cooperative robot is set to the direct operation mode in which the operator directly applies the external force to the cooperative robot by hand and operates the cooperative robot by moving the cooperative robot according to the external force, and the switch portion that causes, when switched to the on state, the cooperative robot to be operable according to the external force is maintained in the on state.

As a result, it is possible to prevent the specific function from being erroneously activated when the operator performs the direct operation.

In the above aspect, the switch portion may be maintained in the on state as the operator continues to press the switch portion.

According to this aspect, when the operator performs the direct operation while continuously pressing the switch portion, the operation on the button to which the specific function is assigned can be disabled.

In the above aspect, the robot system may further include a torch mount disposed between the distal end of the robot arm and the tool portion, in which the switch portion and the button may be provided on the torch mount.

According to this aspect, it is possible to disable the operation on the button provided on the torch mount on which the switch portion that is maintained in the on state by the operator who performs the direct operation is provided.

In the above aspect, the specific function may be a function related to movement of the cooperative robot.

According to this aspect, it is possible to prevent the function related to the movement of the cooperative robot from being erroneously activated when the operator performs the direct operation.

In the above aspect, the specific function may be a function related to a tool operation.

According to this aspect, it is possible to prevent the function related to the tool operation from being erroneously activated when the operator performs the direct operation.

In the above aspect, the specific function may be a function of changing a pattern of a function to be assigned to the button.

According to this aspect, it is possible to prevent the function to be assigned to the button from being erroneously changed when the operator performs the direct operation.

According to the present invention, it is possible to provide a robot system capable of improving efficiency in work of an operator.

### Brief Description of Drawings

FIG. 1 is a diagram illustrating a configuration of a welding robot system according to an embodiment;
FIG. 2 is an enlarged view of a torch mount included in a welding robot of FIG. 1;
FIG. 3 is an enlarged view of the torch mount included in the welding robot of FIG. 1; and
FIG. 4 is a block diagram illustrating functions of a control unit.

### Detailed Description

Preferred embodiments of the present invention will be described with reference to the accompanying drawings. Note that, in the respective drawings, components denoted by the same reference numerals have the same or similar configurations. In addition, since the drawings are schematic, dimensions and ratios of each component are different from actual ones.

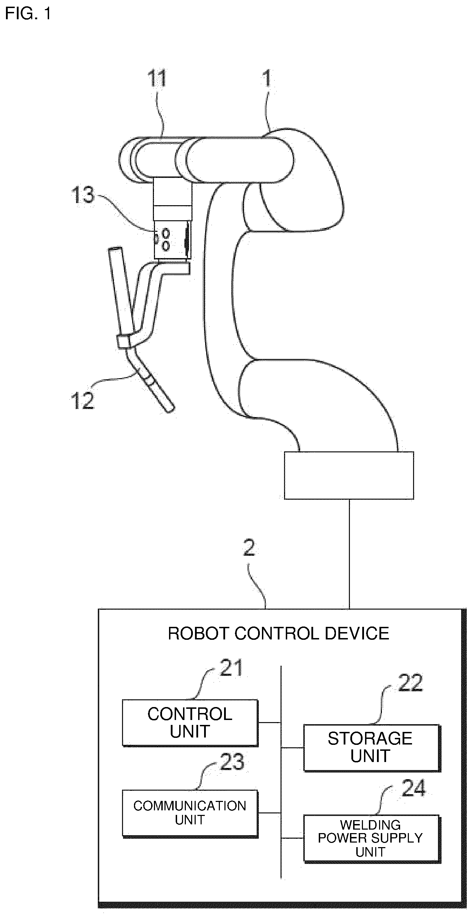

FIG. 1 is a diagram illustrating a configuration of a welding robot system according to an embodiment. The welding robot system includes, for example, a welding robot 1 and a robot control device 2. The welding robot 1 and the robot control device 2 can be connected to each other via, for example, a wired or wireless network such as a communication cable. The welding robot system may include a teaching pendant. The teaching pendant can be connected to the robot control device 2, and is an operation terminal for an operator to teach an operation of the welding robot 1.

The robot control device 2 is a control unit that controls the operation of the welding robot 1, and includes, for example, a control unit 21, a storage unit 22, a communication unit 23, and a welding power supply unit 24.

The control unit 21 is a processor, and controls the welding robot 1 and the welding power supply unit 24 by executing a program such as a welding program stored in the storage unit 22. The communication unit 23 controls communication with each device connected via a network.

For example, the welding power supply unit 24 supplies a welding current, a welding voltage, and the like to the welding robot 1 according to a predetermined welding execution condition in order to generate an arc between a tip of a welding wire and a workpiece. Examples of the welding execution condition include data items such as a welding condition, a welding start position, a welding end position, a welding distance, and a posture of a welding torch. Examples of the welding condition include data items such as the welding current, the welding voltage, a welding speed, a wire feeding speed, and a thickness of the workpiece. The welding power supply unit 24 may be provided separately from the robot control device 2.

The welding robot 1 is a manipulator (robot) that performs arc welding on the workpiece to be welded according to the welding execution condition set in the robot control device 2. The welding robot 1 includes, for example, an articulated arm (robot arm) 11 provided on a base member fixed to a floor surface or the like of a factory, a welding torch portion (tool portion) 12 which is one of tools attached to a distal end of the articulated arm 11, and a torch mount (member) 13 disposed between the distal end of the articulated arm 11 and the welding torch portion 12.

The welding robot 1 is also a cooperative robot on the premise of cooperative work with a person, and can operate according to an external force. Therefore, the operator can directly apply an external force to the welding robot 1 by hand and can directly operate the welding robot 1 by moving the welding robot 1 according to the external force. In addition, the operation of the robot can be taught (directly taught) during the direct operation or arc welding can be performed during the direct operation by switching a mode or the like.

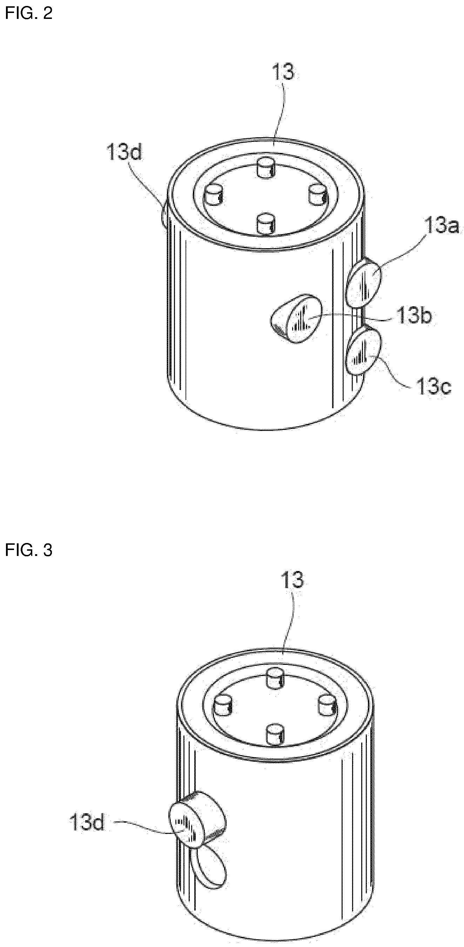

As illustrated in FIGS. 2 and 3, the torch mount 13 includes, for example, three buttons 13a, 13b, and 13c and one switch portion 13d.

The switch portion 13d is a so-called enable switch. When the switch portion 13d is continuously pressed and maintained in an on state, a servo power supply is turned on, and the welding robot 1 becomes operable according to the external force. On the other hand, when the switch portion 13d is released to an off state, the servo power supply is turned off, and the operation of the welding robot 1 is stopped. After the operation is stopped, the welding robot 1 becomes inoperable according to the external force.

The operator can assign desired functions to two buttons 13a and 13c among the three buttons 13a, 13b, and 13c. In the present embodiment, for example, the function of the button 13b disposed in a column (a left column in FIG. 2) different from a column (a right column in FIG. 2) in which the two buttons 13a and 13c are disposed is fixed and cannot be changed by the operator. However, the present invention is not limited thereto, and a user may change all the functions assigned to the three buttons 13a, 13b, and 13c.

The functions that can be assigned to the three buttons 13a, 13b, and 13c include, for example, the following functions (1) to (4). Hereinafter, the description will be made in order.

### (1) Function Related to Movement of Robot:

The function includes, for example, a (1-1) function of switching a way of movement of the robot, a (1-2) function of switching a speed of the robot, and a (1-3) function of operating the robot. The respective functions will be described below in order.

The (1-1) function of switching the way of movement of the robot is a function of switching the way of movement of the robot when manually and directly operating the robot. In the present embodiment, this function is fixedly assigned to the button 13b. Each time a short press is performed on the button 13b to which this function is assigned, a mode of the way of movement is sequentially switched to, for example, one of a translation mode, a rotation mode, and a free mode.

The translation mode is a mode in which only a position of the welding torch is moved without changing the posture of the welding torch. The rotation mode is a mode in which only the posture of the welding torch is changed without changing a position of a tip of the welding torch. The free mode is a mode in which all shafts of the robot can be freely moved.

A duration time for which a button is continuously pressed and by which a short press and a long press described below are distinguished from each other may be appropriately changeable by the operator.

The (1-2) function of switching the speed of the robot is a function of switching the speed of the robot when manually and directly operating the robot. When this function is assigned to a button, each time a short press is performed on the assigned button, for example, two speeds set as "Speed 1" and "Speed 2" are switched. The number of switching speeds is not limited to two, and may be three or more. The operator may select and change a speed to be set as "Speed 1" and a speed to be set as "Speed 2".

The (1-3) function of operating the robot is a function of operating the robot by a predetermined distance (for example, 1 mm or 2 mm) in a predetermined direction (for example, a tool direction in a tool coordinate system).

### (2) Function of Recording Teaching Position:

This function includes, for example, a (2-1) function A of recording a teaching position, a (2-2) function B of recording the teaching position, and a (2-3) function C of recording the teaching position. The function A of recording the teaching position, the function B of recording the teaching position, and the function C of recording the teaching position are functions of recording the current position of the robot as the teaching position when directly and manually operating the robot. Commands inserted automatically after recording the teaching position are different between the respective functions. The respective functions will be described below in order.

When the (2-1) function A of recording the teaching position is assigned to a button and the short press is performed on the button, the position of the robot at that time is recorded as the teaching position. In this function, no command is inserted after recording the position.

When the (2-2) function B of recording the teaching position is assigned to a button and a short press is performed on the button, the position of the robot at that time is recorded as the teaching position, and then a welding start command is inserted. On the other hand, when a long press is performed on the assigned button, the position of the robot at that time is recorded as the teaching position, and then a welding end command is inserted.

When the (2-3) function C of recording the teaching position is assigned to a button and a short press is performed on the button, the position of the robot at that time is recorded as the teaching position, and then the welding start command and a weaving start command are sequentially inserted. On the other hand, when a long press is performed on the assigned button, the position of the robot at that time is recorded as the teaching position, and then a weaving end command and the welding end command are sequentially inserted.

### (3) Function Related to Welding Operation (Tool Operation):

This function includes, for example, an (3-1) inching function, a (3-2) retraction function, and an (3-3) arc-on function. The respective functions will be described below in order.

The (3-1) inching function is a function of performing inching for feeding the welding wire only a little. When this function is assigned to a button, the inching is performed while the assigned button is pressed.

The (3-2) retraction function is a function of performing retraction in which a feeding direction of the welding wire is reversed to return the welding wire. When this function is assigned to a button, the retraction is performed while the assigned button is pressed.

The (3-3) arc-on function is a function of performing arc welding for tack welding or the like. When the switch portion 13d is released, and a long press is performed on the button 13c, the arc-on function is assigned to the button 13c on which the long press is performed. When this function is assigned to the button 13c, an arc is generated when the assigned button 13c is pressed and the switch portion 13d is switched to the on state.

### (4) Function of Changing Pattern of Functions to be Assigned to Respective Buttons:

This function is a function in which a plurality of patterns of functions to be assigned to the three buttons 13a, 13b, and 13c are registered, and the functions of the respective buttons can be collectively changed by selecting one of the patterns.

In the present embodiment, this function is fixedly assigned to the button 13b. When a long press is performed on the button 13b to which this function is assigned, any pattern can be selected.

For example, a pattern in which the "function A of recording the teaching position" is assigned to the button 13a, the "function of switching the way of movement of the robot" is fixedly assigned to the button 13b, and the "function B of recording the teaching position" is assigned to the button 13c can be registered as "Pattern 1". In addition, a pattern in which the "retraction function" is assigned to the button 13a, the "function of switching the way of movement of the robot" is fixedly assigned to the button 13b, and the "inching function" is assigned to the button 13c can be registered as "Pattern 2".

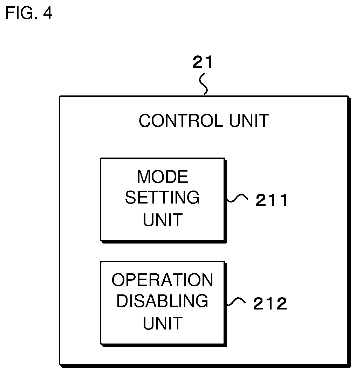

The functions of the control unit 21 will be described with reference to FIG. 4. The control unit 21 includes, for example, a mode setting unit 211 and an operation disabling unit 212. Each unit will be described below.

The mode setting unit 211 sets an operation mode for operating the robot. The operation mode includes, for example, a direct operation mode and a non-direct operation mode. The direct operation mode is a mode in which the operator directly applies an external force to the robot by hand and directly operates the robot by moving the robot according to the external force. The non-direct operation mode is a mode in which the robot is moved by an operation other than the direct operation, for example, the robot is moved by a program.

While the operation mode is set to the direct operation mode and the switch portion 13d is maintained in the on state, the operation disabling unit 212 disables an operation on a button to which a specific function is assigned.

The specific function can include, for example, the (1-1) function of switching the way of movement of the robot, the (1-2) function of switching the speed of the robot, the (1-3) function of operating the robot, the (3-1) inching function, the (3-2) retraction function, and the (4) function of changing the pattern of the functions to be assigned to the respective buttons. In a case where the operator erroneously presses the button during the direct operation, an operation different from the operation intended by the operator may be activated, and thus these functions may cause trouble in the direct operation work.

As described above, with the welding robot system according to the embodiment, while the operation mode for operating the robot is set to the direct operation mode and the switch portion 13d is maintained in the on state, an operation on a button provided on the same torch mount 13 as the switch portion 13d and to which a specific function is assigned can be disabled.

The specific function can include the function of switching the way of movement of the robot, the function of switching the speed of the robot, the function of operating the robot, the inching function, the retraction function, and the function of changing the pattern of the functions to be assigned to the respective buttons.

As a result, it is possible to prevent the specific function from being erroneously activated when the operator performs the direct operation.

Therefore, with the welding robot system according to the embodiment, the efficiency in work of the operator can be improved.

The present invention is not limited to the above-described embodiment and can be implemented in various other forms without departing from the gist of the present invention. For this reason, the above-described embodiment is merely an example in all respects, and should not be construed as limiting.

In the above-described embodiment, a welding tool such as the welding torch used for welding has been described, but a tool to which the present invention can be applied is not limited to the welding tool. For example, the present invention is also applicable to a handling tool such as a robot hand used for handling, a cutting tool or a polishing tool used for cutting or polishing, and the like.

As for the handling tool, for example, it is possible to prevent the robot hand from being opened due to erroneous pressing of a button when the robot hand is moved to grip a target object, and coming into contact with a stand on which the target object is disposed. In addition, it is possible to prevent the robot hand from being closed due to erroneous pressing of a button before setting a gripping force of the robot hand, and damaging the gripped target object (particularly, a soft object such as food).

As for the cutting tool and the polishing tool, for example, it is possible to prevent unnecessary cutting of a target object to be processed caused by erroneous pressing of a button in a case where activation of the cutting tool is assigned to the button.

## Claims

1. A robot system comprising:
a tool portion (12) attached to a distal end of a robot arm (11) of a cooperative robot (1);
a switch portion (13d) that causes, when switched to an on state, the cooperative robot (1) to be operable according to an external force;
a button (13a-c) to which a specific function is assigned;
a mode setting unit (211) that sets an operation mode for operating the cooperative robot (1); and
an operation disabling unit (212) that disables an operation on the button (13a-c) while the operation mode is set to a direct operation mode in which an operator directly applies the external force to the cooperative robot (1) by hand and operates the cooperative robot (1) by moving the cooperative robot (1) according to the external force, and the switch portion (13d) is maintained in the on state,
wherein the switch portion (13d) and the button (13a-c) are provided on any one of the robot arm (11) or a member attached to the robot arm (11) and attached at a position different from the tool portion (12).

2. The robot system according to claim 1, wherein the switch portion (13d) is maintained in the on state as the operator continues to press the switch portion (13d).

3. The robot system according to claim 1, further comprising a torch mount (13) disposed between the distal end of the robot arm (11) and the tool portion (12),
wherein the switch portion (13d) and the button (13a-c) are provided on the torch mount (13).

4. The robot system according to claim 1, wherein the specific function is a function related to movement of the cooperative robot (1).

5. The robot system according to claim 1, wherein the specific function is a function related to a tool operation.

6. The robot system according to claim 1, wherein the specific function is a function of changing a pattern of a function to be assigned to the button (13a-c).
